(19) Europäisches Patentamt / European Patent Office / Office européen des brevets

(11) **EP 2 966 551 A1**

(12) **EUROPEAN PATENT APPLICATION**
published in accordance with Art. 153(4) EPC

(43) Date of publication:
**13.01.2016 Bulletin 2016/02**

(21) Application number: **14760713.9**

(22) Date of filing: **31.01.2014**

(51) Int Cl.:
*G06F 3/042* (2006.01)  *G02B 6/12* (2006.01)
*G02B 6/122* (2006.01)  *G02B 26/02* (2006.01)

(86) International application number:
**PCT/JP2014/052225**

(87) International publication number:
**WO 2014/136508 (12.09.2014 Gazette 2014/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.03.2013 JP 2013044826**
**19.04.2013 JP 2013087940**

(71) Applicant: **Nitto Denko Corporation**
**Ibaraki-shi, Osaka 567-8680 (JP)**

(72) Inventors:
• **SHIMIZU Yusuke**
**Ibaraki-shi**
**Osaka 567-8680 (JP)**
• **YOSHIOKA Ryoma**
**Ibaraki-shi**
**Osaka 567-8680 (JP)**

(74) Representative: **Hoffmann Eitle**
**Patent- und Rechtsanwälte PartmbB**
**Arabellastraße 30**
**81925 München (DE)**

(54) **INFORMATION DISPLAY SYSTEM**

(57) There is provided an information display system including an input device which requires no purpose-built stylus for input operation, and which is configured not to sense unwanted parts such as the little finger of a hand which holds an input element such as a pen and the base of the little finger when information such as a character is inputted to the input device with the input element. This information display system includes a PC P having a display D, and an input device A which enables a user to input new information to be added to information appearing on the display D with an input element 10 such as a pen, thereby outputting the inputted information to the PC P. This input device A includes an optical waveguide W in a sheet form configured such that linear cores 2 arranged in a lattice form are held between an under cladding layer and an over cladding layer both in a sheet form. The cores 2 have an elasticity modulus higher than that of the under cladding layer and that of the over cladding layer. Thus, the deformation rate of a cross section of the cores 2 as seen in a pressed direction is lower than the deformation rates of cross sections of the over cladding layer and the under cladding layer when a surface of the optical waveguide W is pressed.

FIG. 1

EP 2 966 551 A1

**Description**

TECHNICAL FIELD

The present invention relates to an information display system which enables a user to add new information by writing to a document and the like appearing on a display through the use of an input device, thereby displaying the added new information.

BACKGROUND ART

In presentations, meetings and the like, information such as documents previously stored in an information storage medium including a USB memory device and the like is displayed on a display such as a liquid crystal panel through the use of a personal computer (referred to hereinafter as a "PC"), and explanations and the like are given on the displayed documents and the like. During the explanations, a pointing device (see PTL 1, for example) is used as an input device to add new information such as characters, drawings, marks and the like by writing to the displayed documents and the like.

The aforementioned pointing device includes a purpose-built stylus, and a purpose-built board. Information such as characters is inputted to the pointing device by moving the purpose-built stylus on the purpose-built board. Specifically, the pointing device senses the locus of the tip of the purpose-built stylus (input information such as characters) on the purpose-built board through the use of electromagnetic induction to output the locus as a signal to the aforementioned PC, thereby causing the locus to appear on the display. In this manner, the aforementioned pointing device allows a user to intuitively input characters, drawings, marks and the like thereto.

RELATED ART DOCUMENT

PATENT DOCUMENT

PTL 1: JP-A-2004-206613

SUMMARY

However, the aforementioned pointing device involves the need for the purpose-built stylus and the purpose-built board. For this reason, when a large number of people at a meeting use the purpose-built board, it is necessary to pass a single purpose-built stylus around or to prepare a large number of purpose-built styli.

The present applicant has proposed an input device which eliminates the need for the purpose-built stylus and the purpose-built board while allowing a user to intuitively input characters and the like, and has already applied for a patent (JP-A-2012-155697). This input device includes an optical waveguide in the form of a rectangular frame, and is configured to cause light beams to travel in a lattice form in a hollow interior of the rectangular frame. When a user inputs a character and the like into the hollow interior with an input element such as a pen in that state, some of the light beams traveling in the lattice form are intercepted by the tip of the pen, so that the position of the tip of the pen is sensed based on the position of the light beam interception. This allows the inputted character and the like to appear on a display. In this manner, this input device senses the inputted character and the like based on the light beam interception of the pen tip to thereby eliminate the need for the purpose-built stylus and the purpose-built board.

However, when the little finger of a hand which holds the input element such as a pen, the base thereof (hypothenar) and the like come into the hollow interior in the input device according to circumstances, some of the light beams traveling in the lattice form are also intercepted by such parts of the hand. For this reason, there are cases in which such parts of the hand are judged as inputted information to appear on the display. The appearance of such parts of the hand on the display is unwanted.

In view of the foregoing, it is therefore an object of the present invention to provide an information display system including an input device which does not use the light beam interception as mentioned above but uses a change in the propagation of light in cores, based on the writing pressure of an input element such as a pen applied to an optical waveguide, which requires no purpose-built stylus for input operation, and which is configured not to sense unwanted parts such as the little finger of a hand which holds the input element such as a pen and the base of the little finger when information such as a character is inputted to the input device with the input element.

To accomplish the aforementioned object, an information display system according to the present invention comprises : a personal computer having a display for displaying information; and an input device for inputting new information to be added to information appearing on the display by moving a tip input part of an input element to output the inputted information to the personal computer, the input device including (A) a position sensor including: an optical waveguide in a sheet form including an under cladding layer in a sheet form, a plurality of linear cores arranged in a lattice form and formed on a surface of the under cladding layer, and an over cladding layer in a sheet form formed to cover the cores; a light-emitting element connected to one end surface of the cores; a light-receiving element connected to the other end surface of the cores; and a movement locus specifying means for specifying the movement locus of the tip input part of the input element on a surface of the optical waveguide, based on the amount of light propagation in the cores which is changed by the movement of the tip input part, wherein the cores have an elasticity modulus higher than that of the under cladding layer and that of the over cladding layer, and wherein the deformation rate of a cross section of the cores as seen in a pressed direction is lower than the deformation rates of cross sections of the over cladding layer and the under cladding layer when the surface of the optical waveguide in the sheet form is pressed with the tip input part, the movement locus of the tip input part of the input element on the surface of the optical waveguide of the position sensor being specified as new information.

The term "deformation rate" as used in the present invention refers to the proportion of the amount of change in the thickness of the cores, the over cladding layer and the under cladding layer as seen in the pressed direction during the pressing to the thickness thereof before the pressing. The "movement" of the tip input part includes the movement thereof through a distance of 0 (zero), in which case the "movement locus" is a point.

In the information display system according to the present invention, the input device including the optical waveguide in the sheet form including the linear cores arranged in the lattice form is used as a means for sensing the movement locus of the tip input part (such as a pen tip) of the input element (such as a pen). That is, the movement locus of the tip input part of the input element on the surface of the optical waveguide is specified by the amount of light propagation in the cores which is changed by the movement of the tip input part. Thus, no purpose-built stylus is required for input operation. A pen for use in usual writing, a mere elongated rod-shaped object which dispenses no ink and the like may be used as the input element. In the optical waveguide, the elasticity modulus of the cores is higher than that of the under cladding layer and that of the over cladding layer. Thus, when the surface of the over cladding layer of the optical waveguide is pressed, the deformation rate of the cross section of the cores as seen in the pressed direction is lower than the deformation rates of the cross sections of the over cladding layer and the under cladding layer. The cross-sectional area of the cores as seen in the pressed direction is held. When information such as a character is inputted by moving the tip input part of the input element on the surface of the optical waveguide, the bend in the cores is sharp along the tip input part of the input element in the part pressed with the tip input part to cause light leakage (scattering) from the cores, whereas the bend in the cores is gentle along the hand in the part pressed with the hand holding the input element to prevent the occurrence of the aforementioned light leakage (scattering). Thus, the level of light received (the amount of light received) by the light-receiving element is decreased in the cores pressed with the tip input part such as a pen tip, but is prevented from decreasing in the cores pressed with part of the hand holding the input element. The movement locus specifying means is capable of sensing the position (coordinates) of the tip input part such as a pen tip, based on the decrease in the level of received light, and not sensing the part pressed with the hand in which the level of received light does not decrease because it is in the same state as an unpressed part. Thus, the information display system is capable of sensing only the movement locus of the tip input part such as a pen

(information such as an inputted character) to display the movement locus in addition to the information appearing on the display.

BRIEF DESCRIPTION OF DRAWINGS

[FIG. 1] FIG. 1 is a view schematically illustrating one embodiment of an information display system.
[FIG. 2] FIG. 2A is a plan view schematically showing an input device constituting the information display system, and FIG. 2B is an enlarged sectional view thereof.
[FIG. 3] FIG. 3A is a sectional view schematically showing an optical waveguide in the input device which is pressed with an input element, and FIG. 3B is a sectional view schematically showing the optical waveguide pressed with a hand.

DESCRIPTION OF EMBODIMENTS

Next, an embodiment according to the present invention will now be described in detail with reference to the drawings.

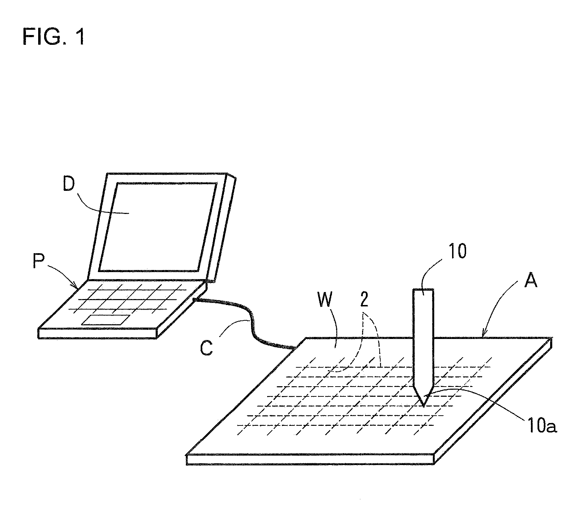

FIG. 1 shows one embodiment of an information display system. The information display system according to this embodiment includes a PC P having a display D, and an input device A which enables a user to input new information to be added to information appearing on the display D with an input element 10 such as a pen and which outputs the inputted information to the PC P. In this embodiment, the transmission of the inputted information from the input device A to the PC P is made through a connecting cable C such as a USB cable. Thus, the PC P and the input device A are connected to each other through the connecting cable C.

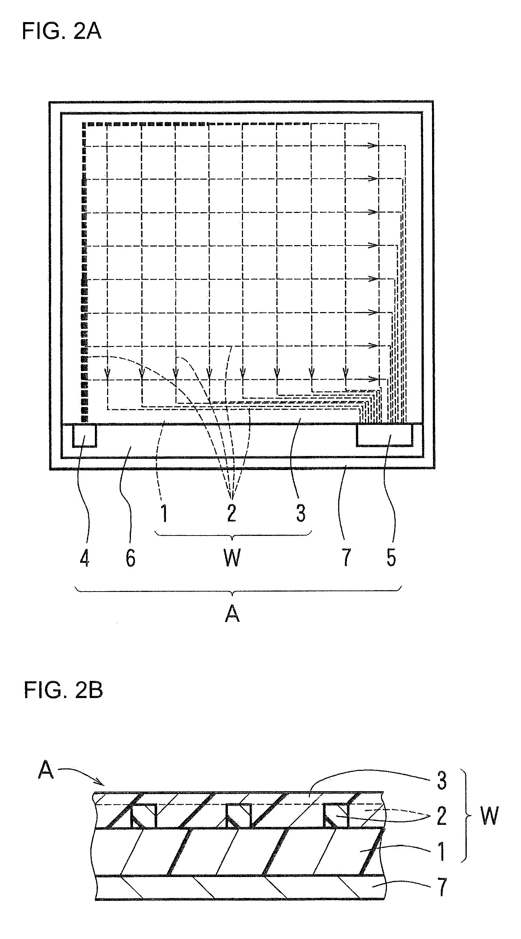

As shown in plan view in FIG. 2A and in enlarged sectional view of a middle portion thereof in FIG. 2B, the input device A includes: an optical waveguide W in a rectangular sheet form configured such that linear cores 2 arranged in a lattice form are held between an under cladding layer 1 and an over cladding layer 3 both in a rectangular sheet form; a light-emitting element 4 connected to one end surface of the linear cores 2 arranged in the lattice form; a light-receiving element 5 connected to the other end surface of the linear cores 2; and a circuit board 6 on which a CPU (central processing unit) (not shown) for controlling the input device A, the light-emitting element 4 and the light-receiving element 5 are mounted. In this embodiment, the optical waveguide W and the circuit board 6 are provided on a surface of a rigid plate 7 such as a resin plate and a metal plate. Light emitted from the light-emitting element 4 passes through the cores 2 and is received by the light-receiving element 5. In the optical waveguide W, the cores 2 have an elasticity modulus higher than the elasticity modulus of the under cladding layer 1 and the elasticity modulus of the over cladding layer 3. When a surface of the optical waveguide W is pressed, the deformation rate of a cross section of the cores 2 as seen in a pressed direction is lower than the deformation rates of cross sections of the over cladding layer 3 and the under cladding layer 1 because of the setting of the elasticity moduli.

In FIG. 2A, the cores 2 are indicated by broken lines, and the thickness of the broken lines indicates the thickness of the cores 2. Also, in FIG. 2A, the number of cores 2 are shown as abbreviated. Arrows in FIG. 2A indicate the directions in which light travels. In this embodiment, power required for the light-emitting element 4, the CPU and the like is supplied from the PC P through the connecting cable C.

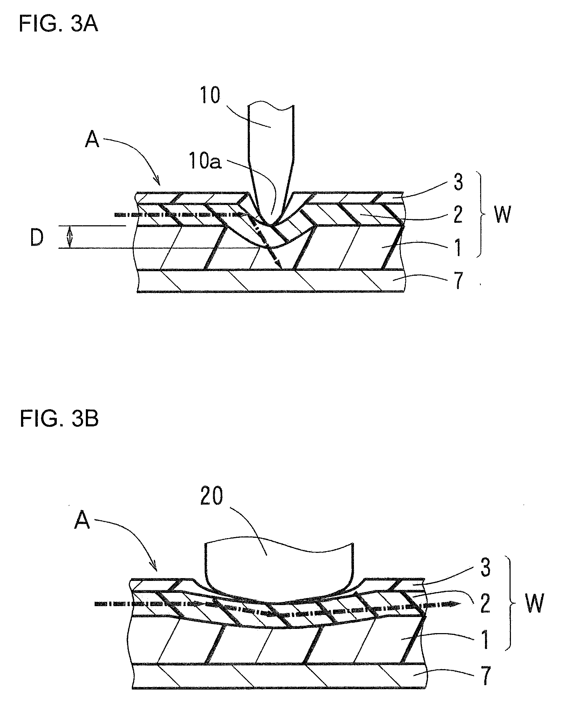

Part of the input device A corresponding to the linear cores 2 arranged in the lattice form serves as an input region. The input of information into the input device A with the input element 10 (with reference to FIG. 1) is done by moving a tip input part (such as a pen tip) 10a (with reference to FIG. 1) of the input element 10 on a surface of the over cladding layer 3 in such a manner as to write a character and the like on the surface of the over cladding layer 3 of the optical waveguide W in the input region. Specifically, as shown in sectional views in FIGS. 3A and 3B, when information such as a character is inputted, for example, by writing onto the surface of the over cladding layer 3 of the optical waveguide W of the input device A with the input element 10 such as a pen held in a hand 20, part of the optical waveguide W which is pressed with the tip input part 10a such as a pen tip (with reference to FIG. 3A) and part of the optical waveguide W which is pressed with the little finger of the hand 20 or the base thereof (hypothenar) (with reference to FIG. 3B) are deformed in cross sections as seen in the pressed direction in such a manner that the over cladding layer 3 and the under cladding layer 1, which have a lower elasticity modulus, are crushed, and that the cores 2 having a higher elasticity modulus are bent along the parts of the tip input part 10a and the hand 20 so as to sink in the under cladding layer 1 while holding the cross-sectional area thereof.

In the part pressed with the tip input part 10a, the cores 2 are bent sharply, as shown in FIG. 3A, because the tip input part 10a is sharp-pointed, so that light leakage (scattering) from the cores 2 occurs (with reference to dash-double-dot arrows in FIG. 3A). In the part pressed with the hand 20 holding the input element 10, whereas, the cores 2 are bent gently, as shown in FIG. 3B, because the hand 20 is considerably larger and rounder than the tip input part 10a, so that the aforementioned light leakage (scattering) does not occur (light travels in the cores 2 without leaking from the cores 2) (with reference to dash-double-dot arrows in FIG. 3B). Thus, the level of light received by the light-receiving element 5 is decreased in the cores 2 pressed with the tip input part 10a, but is prevented from decreasing in the cores 2 pressed with the hand 20 holding the input element 10. The position (coordinates) of the tip input part 10a is sensed based on the decrease in the level of received light. The part pressed with the hand 20 in which the level of received light does not decrease is in the same state as an unpressed part, and is not sensed.

A program (movement locus specifying means) for specifying the movement locus of the tip input part 10a, based on the decrease in the level of light received by the light-receiving element 5 is incorporated in the CPU of the input device A. That is, the input device A serves as a position sensor for sensing the position of the tip input part (such as a pen tip) 10a of the input element (such as a pen) 10 for use in inputting information. Data representing the movement locus of the tip input part 10a of the input element 10 is outputted through the connecting cable C to the PC P, and subjected to an imaging process properly in the PC P, so that the aforementioned movement locus appears on the display D.

In the input device A of the aforementioned information display system, the optical waveguide W in the sheet form including the linear cores 2 arranged in the lattice form is thus used as a means for sensing the movement locus of the tip input part (such as a pen tip) 10a of the input element (such as a pen) 10. For this reason, no purpose-built stylus is required for input operation. A pen for use in usual writing, a mere elongated rod-shaped object which dispenses no ink and the like may be used as the input element 10. Therefore, there is no inconvenience when a large number of people use the input device A.

In the optical waveguide W, the elasticity modulus of the cores 2 is higher than the elasticity modulus of the under cladding layer 1 and the elasticity modulus of the over cladding layer 3. Thus, when the optical waveguide W is pressed with the hand 20 holding the input element 10, only the position of the tip input part 10a is sensed but the part pressed with the hand 20 is not sensed in the aforementioned manner.

Further, part of the optical waveguide W pressed with the tip input part 10a of the input element 10 is deformed as described above during the operation of inputting to the input device A. This allows a user to feel like as if he/she is writing on paper during the input operation, thereby giving a good touch when he/she is writing.

In general, information such as a document for use in explanation in a presentation, a meeting and the like appears on the display D of the PC P. When information such as a character is inputted to the input device A in the aforementioned manner, the information such as a character inputted to the input device A which is superimposed on the information such as a document is displayed on the display D. For such display, software (a program) which converts coordinates of the input region of the input device A into coordinates on the screen of the display D to cause the character and the like inputted to the input device A to appear on the display D is incorporated in the PC P. The information such as a document is, in general, previously stored in an information storage medium such as a hard disk in the PC P and an external USB memory device, and is outputted from the information storage medium. Also, the information appearing on the display D which is the superimposition of the information such as a character inputted to the input device A on the information such as a document is allowed to be stored in the information storage medium. The aforementioned PC P is not limited to a typical personal computer but shall be meant to include devices, such as a smartphone and a tablet device, which are similar in function to the PC.

When the pressing with the tip input part 10a of the input element 10 is released (the tip input part 10a is moved away or the input such as writing is completed), the under cladding layer 1, the cores 2 and the over cladding layer 3 return to their original states (with reference to FIG. 2B) because of their resilience. It is preferable that the sinking depth D of the cores 2 in the under cladding layer 1 is a maximum of 2000 $\mu$m. When the sinking depth D exceeds 2000 $\mu$m, there are dangers that the under cladding layer 1, the cores 2 and the over cladding layer 3 do not return to their original states and that cracking occurs in the optical waveguide W.

The elasticity moduli and the like of the cores 2, the under cladding layer 1 and the over cladding layer 3 will be described in further detail.

The elasticity modulus of the cores 2 is preferably in the range of 1 to 10 GPa, and more preferably in the range of 2 to 5 GPa. When the elasticity modulus of the cores 2 is less than 1 GPa, there are cases in which the cross-sectional area of the cores 2 cannot be held (the cores 2 are crushed) because of the pressure of the tip input part 10a, depending on the shape of the tip input part 10a such as a pen tip. In such cases, there is a danger that the position of the tip input part 10a is not properly sensed. Whereas, when the elasticity modulus of the cores 2 is greater than 10 GPa, there are cases in which the bend in the cores 2 because of the pressure of the tip input part 10a becomes a gentle bend, rather than a sharp bend along the tip input part 10a. This causes no light leakage (scattering) from the cores 2, so that the level of light received by the light-receiving element 5 is not decreased. In such cases, there is a danger that the position of the tip input part 10a is not properly sensed. The cores 2 have the following dimensions: a thickness in the range of 5 to 100 $\mu$m, and a width in the range of 5 to 500 $\mu$m, for example.

The elasticity modulus of the over cladding layer 3 is preferably in the range of 0.1 MPa to less than 10 GPa, and more preferably in the range of 1 MPa to less than 5 GPa. When the elasticity modulus of the over cladding layer 3 is less than 0.1 MPa, there are cases in which the over cladding layer 3 is so soft as to be damaged by the pressure of the tip input part 10a, depending on the shape of the tip input part 10a such as a pen tip. In such cases, it is impossible for the over cladding layer 3 to protect the cores 2. Whereas, when the elasticity modulus of the over cladding layer 3 is not less than 10 GPa, the over cladding layer 3 is not deformed by the pressures of the tip input part 10a and the hand 20 in such a manner as to be crushed but the cores 2 are crushed, resulting in a danger that the position of the tip input part 10a is not properly sensed. The over cladding layer 3 has a thickness in the range of 1 to 200 $\mu$m, for example.

The elasticity modulus of the under cladding layer 1 is preferably in the range of 0.1 MPa to 1 GPa, and more preferably in the range of 1 to 100 MPa. When the elasticity modulus of the under cladding layer 1 is less than 0.1 MPa, there are cases in which the under cladding layer 1 is too soft to return to its original state after being pressed with the tip input part 10a such as a pen tip, so that the pressing cannot be continuously performed. Whereas, when the elasticity modulus of the under cladding layer 1 is greater than 1 GPa, the under cladding layer 1 is not deformed by the pressures of the tip input part 10a and the hand 20 in such a manner as to be crushed but the cores 2 are crushed, resulting in a danger that the position of the tip input part 10a is not properly sensed. The under cladding layer 1 has a thickness in the range of 20 to 2000 $\mu$m, for example.

Examples of the materials for the formation of the cores 2, the under cladding layer 1 and the over cladding layer 3 include photosensitive resins and thermosetting resins. The optical waveguide W may be produced by a manufacturing method depending on the materials. The cores 2 have a refractive index higher than the refractive indices of the under cladding layer 1 and the over cladding layer 3. The adjustment of the elasticity moduli and the refractive indices may be made, for example, by adjusting the selection of the types of the materials for the formation of the cores 2, the under cladding layer 1 and the over cladding layer 3 , and the composition ratio thereof. A rubber sheet may be used as the under cladding layer 1, and the linear cores 2 may be arranged in a lattice form on the rubber sheet.

Also, an elastic layer such as a rubber layer may be provided on the back surface of the under cladding layer 1 (between the under cladding layer 1 and the rigid plate 7). In this case, when the resilience of the under cladding layer 1, the cores 2 and the over cladding layer 3 are weakened or when the under cladding layer 1, the cores 2 and the over cladding layer 3 are originally made of materials having weak resilience, the elastic force of the elastic layer may be used to assist the weak resilience, thereby allowing the under cladding layer 1, the cores 2 and the over cladding layer 3 to return to their original states after the pressing with the tip input part 10a of the input element 10 is released.

Further, two or more input devices A may be used. In this case, it is easy for two or more people to use the input devices A. Also in this case, different colors may be used for information appearing on the display D depending on the input devices A for the purpose of identifying which of the input devices A has received inputted information. Further, the two or more input devices A may be provided in dispersed different places (meeting places and the like), so that presentations are made or meetings are held simultaneously in the different places. In this case, the PC P in one of the places is used as a host PC P and the PC P in the other place or in each of the other places is used as a relay PC P so that the PCs P are connected for communication with each other.

The amount of light leakage (scattering) due to the sharp bend of the cores 2 in the part pressed with the tip input part 10a is important for the purposes of sensing only the position of the tip input part 10a such as a pen tip and not sensing the hand 20 holding the input element 10 such as a pen as mentioned above. A refractive index difference between the cores 2 and the under cladding layer 1 and a refractive index difference between the cores 2 and the over cladding layer 3 are defined, for example, using the ratio A (= R/T) between the radius of curvature R (in $\mu$m) of the tip input part 10a such as a pen tip and the thickness T (in $\mu$m) of the cores 2. Then, the maximum value $\Delta$max of these refractive index differences is expressed as in Equation (1) below. When the refractive index difference is greater than the maximum value $\Delta$max, the amount of light leakage (scattering) is small even in the case where the surface of the optical waveguide W is pressed with the tip input part 10a, so that the level of light received by the light-receiving element 5 is not sufficiently decreased. This makes it difficult to distinguish between the position of the tip input part 10a and the position of the hand 20.

[MATH. 1]

$$\Delta max = 8.0 \times 10^{-2} - A \times (5.0 \times 10^{-4}) \qquad (1)$$

Whereas, the minimum value $\Delta$min of the refractive index difference is expressed as in Equation (2) below. When the refractive index difference is less than the minimum value $\Delta$min, the light leakage (scattering) occurs also in the part pressed with the hand 20. This makes it difficult to distinguish between the position of the tip input part 10a and the position of the hand 20.

[MATH. 2]

$$\Delta min = 1.1 \times 10^{-2} - A \times (1.0 \times 10^{-4}) \qquad (2)$$

It is therefore preferable that the refractive index difference ranges between the minimum value $\Delta$min and the maximum value $\Delta$max. For example, the refractive index difference is in the range of $1.0 \times 10^{-3}$ to $7.95 \times 10^{-2}$, when the radius of curvature R (in $\mu$m) of the tip input part 10a is in the range of 100 to 1000, the thickness T (in $\mu$m) of the cores 2 is in the range of 10 to 100, and the ratio A is in the range of 1 to 100. When the ratio A is greater than 100, the minimum value $\Delta$min shall be $1.0 \times 10^{-3}$ (constant).

The transmission of information from the input device A to the PC P is made through the connecting cable C in the aforementioned embodiment, but may be made wirelessly. In such a case, a power supply such as a battery is provided in the input device A because power required for the input device A is not supplied from the PC P through the connecting cable C.

The rigidplate 7 is provided to support the optical waveguide W in the aforementioned embodiment, but may be dispensed with. In such a case, the input operation is performed while the optical waveguide W of the input device A is placed on a hard flat base such as a table.

Next, an inventive example of the present invention will be described in conjunction with a comparative example. It should be noted that the present invention is not limited to the inventive example.

EXAMPLES

[Material for Formation of Over Cladding Layer]

Component A: 30 parts by weight of an epoxy resin (EPOGOSEY PT available from Yokkaichi Chemical Company Limited).
Component B: 70 parts by weight of an epoxy resin (EHPE3150 available from Daicel Corporation).
Component C: 4 parts by weight of a photo-acid generator (CPI-200K available from San-Apro Ltd.).
Component D: 100 parts by weight of ethyl lactate (available from Wako Pure Chemical Industries, Ltd.).

A material for the formation of an over cladding layer was prepared by mixing these components A to D together.

[Material for Formation of Cores]

Component E: 80 parts by weight of an epoxy resin (EHPE3150 available from Daicel Corporation).
Component F: 20 parts by weight of an epoxy resin (YDCN-700-10 available from Nippon Steel & Sumikin Chemical Co., Ltd.).
Component G: 1 part by weight of a photo-acid generator (SP170 available from ADEKA Corporation).
Component H: 50 parts by weight of ethyl lactate (available from Wako Pure Chemical Industries, Ltd.).

A material for the formation of cores was prepared by mixing these components E to H together.

[Material for Formation of Under Cladding Layer]

Component I: 75 parts by weight of an epoxy resin (EPOGOSEY PT available from Yokkaichi Chemical Company Limited).
Component J: 25 parts by weight of an epoxy resin (JER1007 available from Mitsubishi Chemical Corporation).
Component K: 4 parts by weight of a photo-acid generator (CPI-200K available from San-Apro Ltd.).
Component L: 50 parts by weight of ethyl lactate (available from Wako Pure Chemical Industries, Ltd.).

A material for the formation of an under cladding layer was prepared by mixing these components I to L together.

[Production of Optical Waveguide]

The over cladding layer was formed on a surface of a base material made of glass by a spin coating method with the use of the aforementioned material for the formation of the over cladding layer. The over cladding layer had a thickness of 5 $\mu$m, an elasticity modulus of 1.2 GPa, and a refractive index of 1.503.
Next, the cores were formed on a surface of the over cladding layer by a photolithographic method with the use of the aforementioned material for the formation of the cores. The cores had a thickness of 30 $\mu$m, a width of 100 $\mu$m in a portion of a lattice form, a spacing of 600 $\mu$m, an elasticity modulus of 3 GPa, and a refractive index of 1.523.
Next, the under cladding layer was formed on the surface of the over cladding layer by a spin coating method with the use of the aforementioned material for the formation of the under cladding layer so as to cover the cores. The under cladding layer had a thickness of 200 $\mu$m (as measured from the surface of the over cladding layer), an elasticity modulus of 3 MPa, and a refractive index of 1.503.
Then, a substrate made of PET (having a thickness of 1 mm) with a double-sided adhesive tape (having a thickness of 25 $\mu$m) affixed to one surface thereof was prepared. Next, the other adhesive surface of the double-sided adhesive tape was affixed to a surface of the under cladding layer. In that state, the over cladding layer was stripped from the base material made of glass.

[Comparative Example]

[Material for Formation of Over Cladding Layer]

Component M: 40 parts by weight of an epoxy resin (EPOGOSEY PT available from Yokkaichi Chemical Company Limited).
Component N: 60 parts by weight of an epoxy resin (2021P available from Daicel Corporation).
Component O: 4 parts by weight of a photo-acid generator (SP170 available from ADEKA Corporation).

A material for the formation of an over cladding layer was prepared by mixing these components M to O together.

[Material for Formation of Cores]

Component P: 30 parts by weight of an epoxy resin (EPOGOSEY PT available from Yokkaichi Chemical Company Limited).
Component Q: 70 parts by weight of an epoxy resin (EXA-4816 available from DIC Corporation).
Component R: 4 parts by weight of a photo-acid generator (SP170 available from ADEKA Corporation).

A material for the formation of cores was prepared by mixing these components P to R together.

[Material for Formation of Under Cladding Layer]

Component S: 40 parts by weight of an epoxy resin (EPOGOSEY PT available from Yokkaichi Chemical Company Limited).
Component T: 60 parts by weight of an epoxy resin (2021P available from Daicel Corporation).
Component U: 4 parts by weight of a photo-acid generator (SP170 available from ADEKA Corporation).

A material for the formation of an under cladding layer was prepared by mixing these components S to U together.

[Production of Optical Waveguide]

An optical waveguide having the same dimensions was produced in the same manner as in Inventive Example. However, the over cladding layer had an elasticity modulus of 1 GPa, the cores had an elasticity modulus of 25 MPa, and the under cladding layer had an elasticity modulus of 1 GPa. Also, the over cladding layer had a refractive index of 1.504, the cores had a refractive index of 1.532, and the under cladding layer had a refractive index of 1.504.

[Production of Input Device]

A light-emitting element (XH85-S0603-2s available from Optowell Co., Ltd.) was connected to one end surface of the cores of each of the optical waveguides in Inventive and Comparative Examples, and a light-receiving element (s10226 available from Hamamatsu Photonics K.K.) was connected to the other end surface of the cores thereof. Then, a circuit was provided on which the light-emitting element, the light-receiving element, a CPU for controlling the input device and the like were mounted. Thus, an input device in each of Inventive and Comparative Examples was produced.

[Production of Information Display System]

A PC with a display was prepared, and connected through a connecting cable to each of the input devices, so that an information display system was produced. The aforementioned PC incorporates software (a program) which converts coordinates of an input region of the input device into coordinates on a screen of the display to cause a character and the like inputted to the input device to appear on the display.

[Operation Check of Information Display System]

A USB memory device with information such as a document stored therein was prepared. Using the PC, the information stored in the USB memory device was caused to appear on the display. In this state, an inputter held a ballpoint pen (with a pen tip having a radius of curvature of 350 μm) in his/her hand, and inputted a character into the input region of the input device.

As a result, only the inputted character which was superimposed on the information such as a document appearing on the display was displayed in the information display system including the input device in Inventive Example. Whereas, not only the inputted character but also part of the hand holding the ballpoint pen which was superimposed on the information such as a document appearing on the display was displayed in the information display system including the input device in Comparative Example.

Results similar to those described above were obtained when a mere rod or stick (with a tip having a radius of curvature of 550 μm) was used in place of the aforementioned ballpoint pen.

These results show that the input device in Inventive Example is capable of sensing only inputted information and not sensing unwanted information even when the input element is replaced.

Although specific forms in the present invention have been described in the aforementioned example, the aforementioned example should be considered as merely illustrative and not restrictive. It is contemplated that various modifications evident to those skilled in the art could be made without departing from the scope of the present invention.

The information display system is applicable to adding new information by writing to a document and the like appearing on a display through the use of an input device, thereby displaying the added new information in presentations, meetings and the like.

REFERENCE SIGNS LIST

A       Input device
D       Display
P       PC
W       Optical waveguide
2       Cores
10      Input element

**Claims**

**1.** An information display system comprising:

a personal computer having a display for displaying information; and
an input device for inputting new information to be added to information appearing on the display by moving a tip input part of an input element to output the inputted information to the personal computer,
the input device including

(A) a position sensor including: an optical waveguide in a sheet form including an under cladding layer in a sheet form, a plurality of linear cores arranged in a lattice form and formed on a surface of the under cladding layer, and an over cladding layer in a sheet form formed to cover the cores; a light-emitting element connected to one end surface of the cores; a light-receiving element connected to the other end surface of the cores; and a movement locus specifying means for specifying the movement locus of the tip input part of the input element on a surface of the optical waveguide, based on the amount of light propagation in the cores which is changed by the movement of the tip input part, wherein the cores have an elasticity modulus higher than that of the under cladding layer and that of the over cladding layer, and wherein the deformation rate of a cross section of the cores as seen in a pressed direction is lower than the deformation rates of cross sections of the over cladding layer and the under cladding layer when the surface of the optical waveguide in the sheet form is pressed with the tip input part,

the movement locus of the tip input part of the input element on the surface of the optical waveguide of the position sensor being specified as new information.

FIG. 1

FIG. 2A

FIG. 2B

FIG. 3A

FIG. 3B

<div align="center">

**INTERNATIONAL SEARCH REPORT**

</div>

| International application No. |
| --- |
| PCT/JP2014/052225 |

**A. CLASSIFICATION OF SUBJECT MATTER**
*G06F3/042*(2006.01)i, *G02B6/12*(2006.01)i, *G02B6/122*(2006.01)i, *G02B26/02* (2006.01)i

According to International Patent Classification (IPC) or to both national classification and IPC

**B. FIELDS SEARCHED**

Minimum documentation searched (classification system followed by classification symbols)
G06F3/042, G02B6/12, G02B6/122, G02B26/02

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho   1971–2014   Toroku Jitsuyo Shinan Koho    1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 1-172916 A  (NOK Corp.), 07 July 1989 (07.07.1989), entire text; all drawings (Family: none) | 1 |
| A | JP 2001-222378 A  (NEC Saitama, Ltd.), 17 August 2001 (17.08.2001), entire text; all drawings & US 2001/0013861 A1    & EP 1126406 A2 & CN 1308352 A | 1 |
| A | JP 10-49285 A  (Hitachi, Ltd.), 20 February 1998 (20.02.1998), entire text; all drawings (Family: none) | 1 |

☐ Further documents are listed in the continuation of Box C.   ☐ See patent family annex.

| | |
| --- | --- |
| * Special categories of cited documents:<br>"A" document defining the general state of the art which is not considered  to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 26 February, 2014 (26.02.14) | 11 March, 2014 (11.03.14) |

| Name and mailing address of the ISA/<br>Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004206613 A
- JP 2012155697 A